# EUROPÄISCHE PATENTANMELDUNG

(11) **EP 4 818 526 A1**
(43) Veröffentlichungstag der Anmeldung: **07.10.2026**
(21) Anmeldenummer: 26162416.7
(22) Anmeldetag: 04.03.2026
(51) Int. Cl.: F04D 17/12, F04D 29/42

(54) **ZWEISTUFIGER RADIALKOMPRESSOR MIT AUSGLEICHSKÖRPERN ZUM AUSGLEICH EINER BEI EINER TEMPERATURÄNDERUNG AUFTRETENDEN LÄNGENÄNDERUNG**

(30) Priorität: 01.04.2025 DE 102025112725
(71) Anmelder: ebm-papst Mulfingen GmbH & Co. KGaA & Co. KG, 74673 Mulfingen (DE)
(72) Erfinder: Dobrica, Mihai B., Dr., 69124 Heidelberg (DE); Klüpfel, David, 97271 Kleinrinderfeld (DE)
(74) Vertreter: Staeger & Sperling Partnerschaftsgesellschaft mbB

(57) **Zusammenfassung**

Die Erfindung betrifft einen zweistufigen Radialkompressor (1) mit Gehäuse (10) und Rotor (20), dessen zwei Laufräder (21, 22) an gegenüberliegenden Endabschnitten einer Welle (23) angeordnet sind, wobei der Radialkompressor (1) in oder am Gehäuse (10) angeordnete Ausgleichskörper (31) zum Ausgleich einer bei einer Temperaturänderung auftretenden Differenz zwischen den Längenänderungen von Rotor (20) und Gehäuse (10) aufweist.

## Beschreibung

Die Erfindung betrifft einen zweistufigen Radialkompressor, dessen zwei Laufräder an gegenüberliegenden Endabschnitten einer Welle angeordnet sind, wobei der Radialkompressor Ausgleichskörper zum Ausgleich einer bei einer Temperaturänderung auftretenden Längenänderung aufweist.

Zweistufige Radialkompressoren in einer sogenannten "End-to-end"-Konfiguration sind im Stand der Technik bekannt. Bei diesen ist an den gegenüberliegenden Enden einer Welle jeweils ein Laufrad vorgesehen, sodass die Einlassseiten der durch jeweils ein Laufrad bestimmten Kompressorstufen voneinander abgewandt und die Endabschnitte der Kompressorstufen einander zugewandt sind.

Bei Kompressoren im Allgemeinen und bei Radialkompressoren im Besonderen ist die axiale Ausrichtung von besonderer Wichtigkeit, da zwischen dem jeweiligen Laufrad und dem angrenzenden Gehäuseabschnitt, welcher bei Radialkompressoren als Spiralgehäuse oder Spiralgehäuseabschnitt bezeichnet wird, ein vorbestimmter und vorzugsweise möglichst geringer Abstand eingestellt sein muss, um die bestimmungsgemäße Kompression zu ermöglichen.

Entsprechend ist die Welle von Radialkompressoren axial gelagert, wobei die Axiallagerung der Welle meist angrenzend an eines der Laufräder realisiert ist, sodass also ein erstes Laufrad des Radialkompressors im Wesentlichen unmittelbar benachbart zu der Axiallagerung und ein zweites Laufrad des Radialkompressors in Längsrichtung der Welle von der Axiallagerung beabstandet ist.

Wie für nahezu alle Materialien gilt auch für die Materialien, aus welchen solche Radialkompressoren hergestellt sind, dass diese sich bei einer Temperaturerhöhung entsprechend eines materialspezifischen Wärmeausdehnungskoeffizienten ausdehnen bzw. bei einer Temperaturabsenkung entsprechend des Wärmeausdehnungskoeffizienten schrumpfen.

Obgleich auch eine Änderung der Abmaße in eine Radialrichtung ebenso stattfindet, spielt bei den beschriebenen Radialkompressoren eine Änderung der Abmaße entlang der Welle, d. h. in Längsrichtung, eine besondere Rolle, da hierdurch der Abstand zwischen den Laufrädern und dem jeweils angrenzenden Gehäuse- bzw. Spiralgehäuseabschnitten stark beeinflusst wird.

Dies ergibt sich daraus, dass an dem ersten Laufrad und dem daran angrenzenden Gehäuseabschnitt, welche dem Axiallager nahe sind, die Toleranzkette klein ist, sich eine Längenänderung also nur gering auswirkt, an dem zweiten Laufrad und dem daran angrenzenden Gehäuseabschnitt aber groß, da diese vom Axiallager entfernt sind, sodass sich eine durch Temperaturänderung entstehende Längenänderung stark auswirkt und es zu einer geringeren Effizienz des Verdichters oder sogar zu einem physischen Schaden kommen kann.

Dieses Problem ist bekannt, sodass die grundlegende technische Aufgabe darin besteht, sicherzustellen, dass die relative thermische Verformung der Welle und des Gehäuses unabhängig von den Temperaturschwankungen des Kompressors so ähnlich wie möglich ist, damit die relative Positionierung der Laufräder und des jeweiligen Spiralgehäuses bzw. Spiralgehäuseabschnitts unabhängig von den thermischen Umgebungs- und Betriebsbedingungen beibehalten wird.

Eine triviale Lösung wäre, das Gehäuse aus dem gleichen Material wie die Welle zu fertigen, um das gleiche Wärmeausdehnungsverhalten zu erhalten. Das ist in der Praxis jedoch nachteilhaft und wenig wünschenswert, da das Material der Welle häufig ein teures oder zerbrechliches Material wie beispielsweise Hochpräzisionskeramik ist. Solche Materialien eignen sich folglich nicht für ein massives und gegebenenfalls stoßbelastetes Gehäuse.

Der Erfindung liegt deshalb die Aufgabe zugrunde, die vorgenannten Nachteile zu überwinden und einen zweistufigen Kompressor bereitzustellen, welcher im Betrieb bei oder nach Temperaturänderungen keinen physischen Schaden nimmt und weiter mit hoher Effizienz bzw. ohne Effizienzeinbußen betreibbar ist.

Diese Aufgabe wird durch die Merkmalskombination gemäß Patentanspruch 1 gelöst.

Erfindungsgemäß wird daher ein zweistufiger Radialkompressor mit einem Gehäuse sowie einem in dem Gehäuse gelagerten Rotor vorgeschlagen. Der Rotor weist ein erstes Laufrad, ein zweites Laufrad und eine Welle auf, an deren gegenüberliegenden Endabschnitten oder an deren gegenüberliegenden Stirnseiten jeweils eines der zwei Laufräder fixiert ist, was einer "End-to-end"-Konfiguration entspricht. Der Rotor weist einen insbesondere vorbestimmten bzw. bekannten ersten Wärmeausdehnungskoeffizienten auf, welcher sich auch aus mehreren und ggfs. auch unterschiedlichen Wärmeausdehnungskoeffizienten der verschiedenen Komponenten des Rotors, wie der Welle und der zwei Laufräder, ergeben kann. Entsprechend führt der erste Wärmeausdehnungskoeffizient bei einer Temperaturänderung zu einer Längenänderung des Rotors. Vereinfacht wird davon ausgegangen, dass die Temperaturänderung für den Rotor und das Gehäuse im Wesentlichen identisch ist. Weiter soll klargestellt werden, dass als Länge die Erstreckung der jeweiligen Komponente entlang einer zu der Welle koaxialen Rotationsachse verstanden wird, um welche die Welle bzw. der Rotor rotierbar angeordnet ist, sodass die Längenänderung des Rotors also der Änderung der Abmessungen des Rotors entlang der Rotationsachse entspricht. Ebenso weist das Gehäuse einen insbesondere vorbestimmten bzw. bekannten zweiten Wärmeausdehnungskoeffizienten auf, welcher sich wiederum auch aus mehreren und ggfs. auch unterschiedlichen Wärmeausdehnungskoeffizienten der verschiedenen Komponenten des Gehäuses, wie den im Weiteren noch genannten Gehäuseabschnitten, ergeben kann. Dabei unterscheidet sich der zweite Wärmeausdehnungskoeffizient von dem ersten Wärmeausdehnungskoeffizienten, was bei der Temperaturänderung zu einer Längenänderung des Gehäuses führt, welche sich von der Längenänderung des Rotors unterscheidet, sodass es also zu unterschiedlichen und mithin nachteilhaften Längenänderungen kommen würde. Erfindungsgemäß ist daher vorgesehen, dass in oder an dem Gehäuse zumindest zwei sich parallel der Welle bzw. auch parallel der Rotationsachse erstreckende Ausgleichskörper angeordnet sind, welche einen dritten Wärmeausdehnungskoeffizienten aufweisen und ausgebildet sind, bei der bzw. einer Temperaturänderung und/oder sich vorbestimmt unterscheidenden Temperaturen von Rotor und Gehäuse eine vorbestimmte Längenänderung des Gehäuses herbeizuführen und die Längenänderung des Gehäuses an die Längenänderung des Rotors anzugleichen, sodass bei der Temperaturänderung die Längenänderung des Gehäuses im Wesentlichen der Längenänderung des Rotors entspricht. Es folgt, dass es durch die erfindungsgemäßen Merkmale zu sehr ähnlichen bzw. annähernd identischen Längenänderungen an Rotor und Gehäuse kommt und die jeweilige relative Positionierung der Laufräder zu einem jeweils angrenzenden Gehäuseabschnitt bzw. einem jeweils zugehörigen Spiralgehäuseabschnitt trotz der Temperaturänderung im Wesentlichen gleichbleibt bzw. sich nur minimal ändert.

Zusammenfassend betrifft die Erfindung einen zweistufigen Radialkompressor mit Gehäuse und Rotor, dessen zwei Laufräder an gegenüberliegenden Endabschnitten einer Welle angeordnet sind, wobei der Radialkompressor in oder am Gehäuse angeordnete Ausgleichskörper zum Ausgleich einer bei einer Temperaturänderung auftretenden Differenz zwischen den Längenänderungen von Rotor und Gehäuse aufweist.

Dabei können die Ausgleichskörper auch als Ausgleichselemente oder Ausgleichsstäbe bezeichnet werden.

Bezüglich der Wärmeausdehnungskoeffizienten ist festzustellen, dass der erste Wärmeausdehnungskoeffizient des Rotors größer sein kann als der zweite Wärmeausdehnungskoeffizient des Gehäuses. Grundsätzlich ist jedoch auch das Gegenteil möglich.

Durch eine entsprechende Wahl der Wärmeausdehnungseigenschaften bzw. des Wärmeausdehnungskoeffizienten der Ausgleichskörper unter Berücksichtigung der Wärmeausdehnungseigenschaften bzw. der Wärmeausdehnungskoeffizienten von Rotor und Gehäuse können also die thermischen Ausdehnungseigenschaften des Gehäuses des Radialkompressors derart gesteuert werden, dass in Bezug auf die axiale Ausdehnung bzw. die Längenänderung an Rotor und Gehäuse ein gleiches thermisches Verhalten auftritt. Dadurch wird sichergestellt, dass sich das Gehäuse und der Rotor bzw. insbesondere die Welle um den gleichen Betrag verformen, wenn der Radialkompressor im Stillstand, z. B. während der Lagerung, des Transports oder bei Nichtgebrauch, oder im Betrieb Temperaturschwankungen ausgesetzt ist.

Darüber hinaus kann es im Betrieb und insbesondere bei extremen Betriebsbedingungen dazu kommen, dass sich an Rotor und Gehäuse unterschiedliche Temperaturänderungen einstellen und sich dadurch für Rotor und Gehäuse unterschiedliche Temperaturen bzw. unterschiedliche Temperaturniveaus ergeben. Daher kann gemäß einer vorteilhaften Weiterbildung vorgesehen sein, dass der erste Wärmeausdehnungskoeffizient und/oder der zweite Wärmeausdehnungskoeffizient und/oder der dritte Wärmeausdehnungskoeffizient diese unterschiedlichen Temperaturniveaus berücksichtigend derart gewählt sind, dass sich bei vorbestimmt einstellenden Temperaturniveaus die sich aus den unterschiedlichen Wärmeausdehnungskoeffizienten ergebenden Längenänderungen an Gehäuse und Rotor im Wesentlichen gleich sind.

Der erste Wärmeausdehnungskoeffizient des Rotors und ein äquivalenter Wärmeausdehnungskoeffizient aus dem ersten Wärmeausdehnungskoeffizient und dem zweiten Wärmeausdehnungskoeffizienten können sich folglich unterscheiden, was bei vorbestimmt unterschiedlichen Temperaturen an Rotor und Gehäuse wiederum zu einer im Wesentlichen identischen Längenänderung von Rotor und Gehäuse führt.

Neben den bereits skizzierten Vorteilen und der Kostenersparnis gegenüber den ansonsten bekannten Varianten kommt hinzu, dass die Abstände und Toleranzen des Kompressors geringer sein können, da die unterschiedlichen Längenausdehnungen bei der Auslegung nicht mehr berücksichtigt werden müssen. Dadurch kann die Effizienz des Kompressors weiter gesteigert werden.

Erfindungsgemäß können die Ausgleichskörper hierfür aus dem gleichen Material bestehen, aus welchem die Welle besteht. Alternativ können die Ausgleichskörper jedoch auch aus einem davon abweichenden Material bestehen, welches durch einen entsprechenden Wärmeausdehnungskoeffizienten ausgebildet ist, die am Gehäuse gewünschte Längenänderung herbeizuführen.

Vorzugsweise ist vorgesehen, dass die Ausgleichskörper in Umfangsrichtung um die Welle gleichmäßig verteilt sind. Grundsätzlich könnte jedoch auch eine abweichende Verteilung vorgesehen sein, welche zu einer gleichmäßigen Längenänderung an dem Gehäuse führt.

Weiter können die Ausgleichskörper jeweils einen kreisförmigen, rechteckigen oder mehreckigen, insbesondere hexagonalen Querschnitt aufweisen.

Zusätzlich oder alternativ hierzu kann eine jeweilige Längsachse der Ausgleichskörper parallel und exzentrisch, d. h. nicht koaxial, zu der Welle bzw. der Rotationsachse verlaufen.

Zur Anordnung der Ausgleichskörper an dem Gehäuse können in oder an dem Gehäuse Aufnahmen vorgesehen sein, welche jeweils zu einem der Ausgleichskörper korrespondieren. Dabei ist jeweils ein Ausgleichskörper in jeweils eine der Aufnahmen eingeschoben.

Das Gehäuse des Radialkompressors weist vorzugsweise einen ersten Spiralgehäuseabschnitt, welcher zu dem ersten Laufrad korrespondiert, einen zweiten Spiralgehäuseabschnitt, welcher zu dem zweiten Laufrad korrespondiert, und einen zwischen den zwei Spiralgehäuseabschnitten angeordneten Statorgehäuseabschnitt auf, welcher einen Stator eines den Rotor um die Rotationsachse antreibenden Motors vorzugsweise vollständig aufnimmt.

Hiervon ausgehend sieht eine vorteilhafte Weiterbildung vor, dass die Aufnahmen zumindest abschnittsweise durch das Gehäuse und insbesondere durch den ersten Spiralgehäuseabschnitt und/oder den zweiten Spiralgehäuseabschnitt und/oder den Statorgehäuseabschnitt gebildet werden.

Hiervon unabhängig oder auch zusätzlich kann zudem vorgesehen sein, dass die Aufnahmen zumindest abschnittsweise durch einen insbesondere zylindrischen Ausgleichsabschnitt des Gehäuses gebildet werden, welcher sich innerhalb oder außerhalb des Statorgehäuseabschnitts koaxial zu der Welle erstreckt.

Ist ein Ausgleichsabschnitt vorgesehen, kann zwischen diesem und dem in Radialrichtung angrenzenden Abschnitt, beispielsweise dem Statorgehäuseabschnitt, eine Dichtebene gebildet sein.

Weiter kann der Ausgleichsabschnitt zu einer Stirnseite hin an einem der Spiralgehäuseabschnitte fixiert und zu der gegenüberliegenden Seite an den anderen Spiralgehäuseabschnitt oder den Statorgehäuseabschnitt anliegend ausgebildet sein.

Die Ausgleichskörper können dabei in oder an dem Statorgehäuseabschnitt angeordnet sein und insbesondere mit zumindest einer Stirnseite an dem Statorgehäuseabschnitt anliegen.

Weiter können die Ausgleichskörper zwischen dem ersten Spiralgehäuseabschnitt und dem zweiten Spiralgehäuseabschnitt angeordnet sein, sodass eine Längenänderung der Ausgleichskörper entlang der Rotationsachse zu einer Änderung des Abstands der zwei Spiralgehäuseabschnitte zueinander führt.

Ferner können die Ausgleichskörper jeweils an dem ersten Spiralgehäuseabschnitt und/oder dem zweiten Spiralgehäuseabschnitt anliegen.

Bezüglich ihrer Länge entlang der Rotationsachse können die Ausgleichskörper eine Länge aufweisen, welche kleiner oder größer der Länge des Gehäuses oder des Statorgehäuseabschnitts ist. Weiter ist auch möglich, dass die Ausgleichskörper eine Länge gleich der Länge des Spiralgehäuseabschnitts aufweisen, sodass die Ausgleichskörper beidseitig an den Spiralgehäuseabschnitten anliegen.

Von einer Unterteilung des Gehäuses in die genannten Abschnitte ausgehend, kann der Statorgehäuseabschnitt mit dem ersten Spiralgehäuseabschnitt oder mit dem zweiten Spiralgehäuseabschnitt einstückig als ein Körper ausgebildet sein.

Alternativ können der Statorgehäuseabschnitt, der erste Spiralgehäuseabschnitt und der zweite Spiralgehäuseabschnitt jeweils separat als ein Körper ausgebildet sein.

Bei beiden Varianten gilt, dass vorzugsweise vorgesehen ist, dass eine Verbindung und/oder Abdichtung zwischen dem Statorgehäuseabschnitt, dem ersten Spiralgehäuseabschnitt und dem zweiten Spiralgehäuseabschnitt ausgebildet ist, der Längenänderung und insbesondere der durch die Ausgleichskörper an dem Gehäuse hervorgerufenen Längenänderung standzuhalten, d. h. die bestimmungsgemäße Funktion beizubehalten.

Die Ausgleichskörper können jeweils einstückig oder in Längsrichtung in mehrere Unterkörper unterteilt sein. Sind mehrere Unterkörper je Ausgleichskörper vorgesehen, können diese jeweils einen eigenen Abschnitt in einer zugehörigen Aufnahme aufweisen, wodurch die einzelnen Längenänderungen der Unterkörper einfacher und gleichmäßiger auf das Gehäuse und insbesondere dessen Statorgehäuseabschnitt übertragen werden können.

Weiter können die Ausgleichskörper jeweils in Längsrichtung an mehreren Stellen eine Längenänderung auf das Gehäuse übertragend mit dem Gehäuse verbunden sein, was beispielsweise durch in Nuten eingreifende Vorsprünge oder Federn gleich einer Nut-Feder-Verbindung realisiert sein kann.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Längsschnitt entlang der Rotationsachse durch einen zweistufigen Kompressor;
- Fig. 2a - c: verschiedene Konfigurationen eines Ausgleichsabschnitts mit darin angeordneten Ausgleichskörpern.

Die Figuren sind beispielhaft schematisch. Gleiche Bezugszeichen in den Figuren weisen auf gleiche funktionale und/oder strukturelle Merkmale hin.

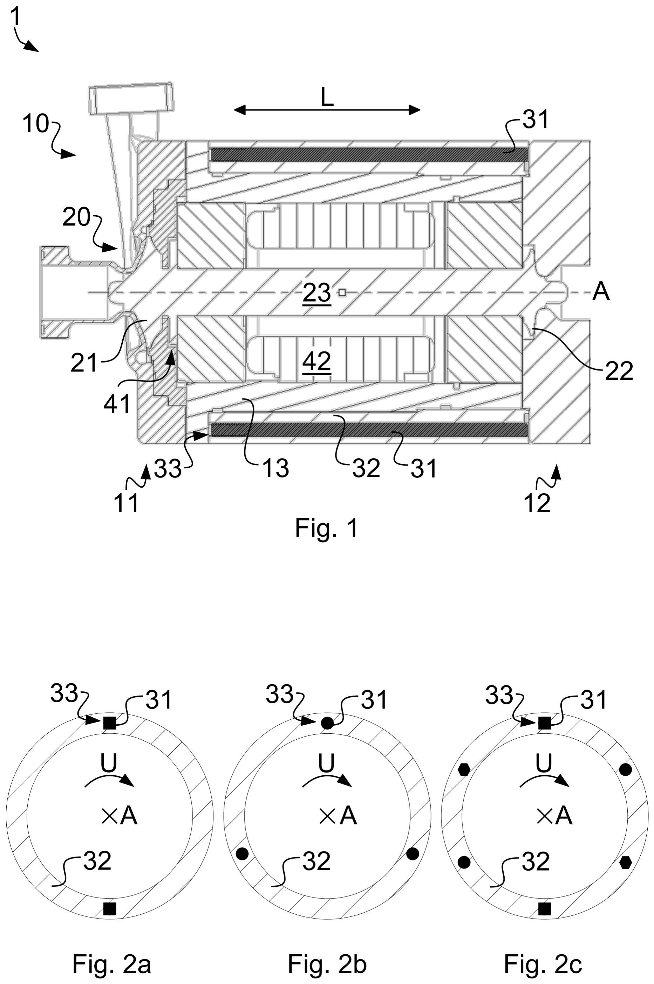

In Figur 1 ist ein erfindungsgemäß ausgebildeter zweistufiger Radialkompressor 1 dargestellt. Dieser weist ein Gehäuse 10 und einen darin um eine Rotationsachse A rotierbar gelagerten Rotor 20 auf, wobei der Rotor 20 im Wesentlichen eine Welle 23 mit zwei end- bzw. stirnseitig angeordneten Laufrädern 21 aufweist.

Der Rotor 20 ist bezüglich seiner Axialposition durch ein Axiallager 41 in dem Gehäuse 10 gelagert und festgelegt, wobei das erste Laufrad 21 an das Axiallager 41 angrenzt bzw. der Abstand des ersten Laufrades 21 zu dem Axiallager 41 deutlich geringer ist als der Abstand des zweiten Laufrades 22 zu dem Axiallager 41, welches im Wesentlichen gleich der Längserstreckung der Welle 23 von dem Axiallager 41 beabstandet ist.

Da die Komponenten des Rotors 20 und die Komponenten des Gehäuses 10 unterschiedliche Wärmeausdehnungseigenschaften und konkret unterschiedliche Wärmeausdehnungskoeffizienten aufweisen, verhalten sich Rotor 20 und Gehäuse 10 bei Temperaturänderungen bezüglich einer jeweiligen Längenänderung in Längsrichtung L, d. h. entlang der Rotationsachse A, unterschiedlich. In der Folge kann es zu einer Verschlechterung der Effizienz des Radialkompressors 1 oder auch zu einer Beschädigung kommen, da sich insbesondere die Axialposition des zweiten Laufrades 22 gegenüber dem Gehäuse 10 ändert.

Um eine durchgehend hohe Effizienz zu gewährleisten und Beschädigungen zu verhindern, ist vorgesehen, dass der Radialkompressor zumindest zwei sich parallel zur Welle 23 erstreckende Ausgleichskörper 31 aufweist. Diese weisen einen dritten Wärmeausdehnungskoeffizienten auf und sind ausgebildet, die Längenänderung des Gehäuses 10 an die Längenänderung des Rotors 20 anzugleichen, sodass bei der Temperaturänderung die Längenänderung des Gehäuses 10 entlang der Längsachse L der Längenänderung des Rotors 20 entspricht.

Neben einem zu dem ersten Laufrad 21 korrespondierenden ersten Spiralgehäuseabschnitt 11, einem zu dem zweiten Laufrad 22 korrespondierenden zweiten Spiralgehäuseabschnitt 12 und einem dazwischen angeordneten Statorgehäuseabschnitt 13 des Gehäuses 10, welcher einen Stator 42 eines Motors zum rotatorischen Antrieb des Rotors 20 um die Rotationsachse A vollständig aufnimmt, weist dieses hierfür einen Ausgleichsabschnitt 32 auf, welcher die Rotationsachse A ring- bzw. zylinderförmig umläuft und gemäß der abgebildeten Variante radialaußen an den Statorgehäuseabschnitt 13 angrenzt.

In dem Ausgleichsabschnitt 32 sind Aufnahmen 33 zur Aufnahme der Ausgleichskörper 31 vorgesehen, wobei die Aufnahmen 33 den Ausgleichsabschnitt 32 vorliegend in Längsrichtung L vollständig durchlaufen.

Der Ausgleichsabschnitt 32 ist an der Seite des zweiten Laufrades 22 an dem zweiten Spiralgehäuseabschnitt 12 fixiert und grenzt an der Seite des ersten Laufrades 21 an einen durch den Statorgehäuseabschnitt 13 gebildeten Kragen an.

Kommt es durch die in den Aufnahmen 33 angeordneten Ausgleichskörper 31 zu einer Längenänderung, drücken diese in Längsrichtung L mit ihren Stirnseiten gegen den zweiten Spiralgehäuseabschnitt 12 und über den Kragen des Statorgehäuseabschnitts 13 auf den ersten Spiralgehäuseabschnitt 11, sodass die Spiralgehäuseabschnitte 11, 12 in Längsrichtung auseinander gedrückt werden.

Durch die dargestellte Konfiguration wird die Längenänderung im Bereich des Statorgehäuseabschnitts 13 durch eine relative Verschiebung des Statorgehäuseabschnitts 13 und des Ausgleichsabschnitts 32 ausgeglichen, wobei in Radialrichtung zwischen diesen eine zylindrische Dichtebene gebildet ist.

In den Figuren 2a bis 2c sind Querschnitte von Ausgleichsabschnitten 32 mit in verschiedenen Konfigurationen vorgesehenen Aufnahmen 33 mit Ausgleichskörpern 31 dargestellt.

Grundlegend ist festzustellen, dass erfindungsgemäß zumindest zwei Ausgleichskörper 31 vorgesehen sind, wobei die Ausgleichskörper 31 jeweils verschiedene Querschnitte aufweisen und in verschiedenen Ausrichtungen um die Rotationsachse A angeordnet sein können.

In Figur 2a ist eine einfache erste Variante dargestellt, bei welcher genau zwei Ausgleichskörper 31 vorgesehen sind, welche beispielhaft einen quadratischen Querschnitt aufweisen und einander gegenüberliegend in dem Ausgleichsabschnitt 32 des Gehäuses 10 angeordnet sind.

Davon abweichend zeigt Figur 2b drei Ausgleichskörper 31, welche in Umfangsrichtung U gleichmäßig um die Rotationsachse A verteilt sind und einen runden Querschnitt aufweisen.

Gemäß der Variante, wie sie in Figur 2c gezeigt ist, sind sechs Ausgleichskörper 31 vorgesehen, wobei jeweils zwei gegenüberliegende Ausgleichskörper 31 identische Querschnitte aufweisen und Ausgleichskörper 31 mit runden, rechteckigen und hexagonalen Querschnitten vorgesehen sind. Dies kann insbesondere auch zur Codierung verwendet werden, da dann nur die vorbestimmten Ausgleichskörper 31 in die jeweils bezüglich ihrer Form korrespondierenden Aufnahmen 33 einsteckbar sind.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Zweistufiger Radialkompressor (1) mit einem Gehäuse (10) sowie einem in dem Gehäuse (10) gelagerten Rotor (20), welcher ein erstes Laufrad (21), ein zweites Laufrad (22) und eine Welle (23) aufweist, an deren gegenüberliegenden Endabschnitten jeweils eines der zwei Laufräder (21, 22) fixiert ist,
wobei der Rotor (20) einen ersten Wärmeausdehnungskoeffizienten aufweist, welcher bei einer Temperaturänderung zu einer Längenänderung des Rotors (20) führt,
wobei das Gehäuse (10) einen zweiten Wärmeausdehnungskoeffizienten aufweist, welcher sich von dem ersten Wärmeausdehnungskoeffizienten unterscheidet und bei der Temperaturänderung zu einer Längenänderung des Gehäuses (10) führt, welche sich von der Längenänderung des Rotors (20) unterscheidet,
**dadurch gekennzeichnet, dass**
in oder an dem Gehäuse (10) zumindest zwei sich parallel zur Welle (23) erstreckende Ausgleichskörper (31) angeordnet sind, welche einen dritten Wärmeausdehnungskoeffizienten aufweisen und ausgebildet sind, bei der Temperaturänderung und/oder sich vorbestimmt unterscheidenden Temperaturen von Rotor (20) und Gehäuse (10) eine vorbestimmte Längenänderung des Gehäuses (10) herbeizuführen und die Längenänderung des Gehäuses (10) an die Längenänderung des Rotors (20) anzugleichen, sodass bei der Temperaturänderung die Längenänderung des Gehäuses (10) der Längenänderung des Rotors (20) entspricht.

2. Radialkompressor gemäß Anspruch 1,
wobei die Ausgleichskörper (31) in Umfangsrichtung (U) um die Welle (23) gleichmäßig verteilt sind.

3. Radialkompressor gemäß Anspruch 1 oder 2,
wobei die Ausgleichskörper (31) jeweils einen kreisförmigen, rechteckigen oder mehreckigen, insbesondere hexagonalen Querschnitt aufweisen
und/oder eine jeweilige Längsachse der Ausgleichskörper (31) parallel und exzentrisch zu der Welle (23) verläuft.

4. Radialkompressor nach einem der vorhergehenden Ansprüche,
wobei in oder an dem Gehäuse (10) Aufnahmen (33) vorgesehen sind, welche jeweils zu einem der Ausgleichskörper (31) korrespondieren und
wobei jeweils ein Ausgleichskörper (31) in jeweils eine der Aufnahmen (33) eingeschoben ist.

5. Radialkompressor nach einem der vorhergehenden Ansprüche,
wobei das Gehäuse (10) einen ersten Spiralgehäuseabschnitt (11), welcher zu dem ersten Laufrad (21) korrespondiert, einen zweiten Spiralgehäuseabschnitt (12), welcher zu dem zweiten Laufrad (22) korrespondiert, und einen zwischen den zwei Spiralgehäuseabschnitten (11, 12) angeordneten Statorgehäuseabschnitt (13) aufweist, welcher einen Stator (42) eines den Rotor (20) antreibenden Motors vollständig aufnimmt.

6. Radialkompressor nach den beiden vorhergehenden Ansprüchen,
wobei die Aufnahmen (33) zumindest abschnittsweise durch das Gehäuse (10) und insbesondere durch den ersten Spiralgehäuseabschnitt (11) und/oder den zweiten Spiralgehäuseabschnitt (12) und/oder den Statorgehäuseabschnitt (13) gebildet werden
und/oder wobei die Aufnahmen (33) zumindest abschnittsweise durch einen Ausgleichsabschnitt (32) des Gehäuses (10) gebildet werden, welcher sich innerhalb oder außerhalb des Statorgehäuseabschnitts (13) koaxial zu der Welle (23) erstreckt.

7. Radialkompressor nach einem der beiden vorhergehenden Ansprüche,
wobei die Ausgleichskörper (31) in oder an dem Statorgehäuseabschnitt (13) angeordnet sind und insbesondere mit zumindest einer Stirnseite an dem Statorgehäuseabschnitt (13) anliegen,
und/oder wobei die Ausgleichskörper (31) zwischen dem ersten Spiralgehäuseabschnitt (11) und dem zweiten Spiralgehäuseabschnitt (12) angeordnet sind, sodass eine Längenänderung der Ausgleichskörper (31) zu einer Änderung des Abstands der zwei Spiralgehäuseabschnitte (11, 12) zueinander führt,
und/oder wobei die Ausgleichskörper (31) jeweils an dem ersten Spiralgehäuseabschnitt (11) und/oder dem zweiten Spiralgehäuseabschnitt (12) anliegen.

8. Radialkompressor nach einem der Ansprüche 5 bis 7,
wobei die Ausgleichskörper (31) eine Länge aufweisen, welche kleiner oder größer der Länge des Gehäuses (10) oder des Statorgehäuseabschnitts (13) ist.

9. Radialkompressor nach einem der Ansprüche 5 bis 8,
wobei der Statorgehäuseabschnitt (13) mit dem ersten Spiralgehäuseabschnitt (11) oder mit dem zweiten Spiralgehäuseabschnitt (12) einstückig als ein Körper ausgebildet ist
oder wobei der Statorgehäuseabschnitt (13), der erste Spiralgehäuseabschnitt (11) und der zweite Spiralgehäuseabschnitt (12) jeweils als ein Körper ausgebildet sind
und wobei eine Verbindung und/oder Abdichtung zwischen dem Statorgehäuseabschnitt (13), dem ersten Spiralgehäuseabschnitt (11) und dem zweiten Spiralgehäuseabschnitt (12) ausgebildet ist, der Längenänderung standzuhalten.

10. Radialkompressor nach einem der vorhergehenden Ansprüche,
wobei die Ausgleichskörper (31) jeweils einstückig oder in Längsrichtung (L) in mehrere Unterkörper unterteilt sind
und/oder wobei die Ausgleichskörper (31) jeweils in Längsrichtung (L) an mehreren Stellen eine Längenänderung auf das Gehäuse (10) übertragend mit dem Gehäuse (10) verbunden sind.
